# EUROPEAN PATENT APPLICATION

(11) **EP 1 887 388 A2**
(43) Date of publication of application: **13.02.2008**
(21) Application number: 07253140.3
(22) Date of filing: 10.08.2007
(51) Int. Cl.: G02B 5/02

(54) **Partially submerged bead monolayer**

(30) Priority: 10.08.2006 US 502565
(71) Applicant: Rohm and Haas Denmark Finance A/S, 2100 Copenhagen (DK)
(72) Inventor: Chari, Krishnan, Fairport, New York 14450 (US); Lander, Charles W., Wayland, New York 14572 (US); Wang, Jin-Shan, Pittsford, New York 14534 (US); Lee, Junwon, Webster, New York 14580 (US)
(74) Representative: Buckley, Guy Julian

(57) **Abstract**

The invention provides a certain type of optical film, processes for making the film, and a backlight device containing the film. The film includes a substantially monolayer arrangement of beads partially submerged in a binder.

## Description

### FIELD OF THE INVENTION

This invention relates to a light re-directing film, a backlight and process for making them that may be used, for example, in conjunction with a back light unit in a liquid crystal display (LCD) device.

### BACKGROUND OF THE INVENTION

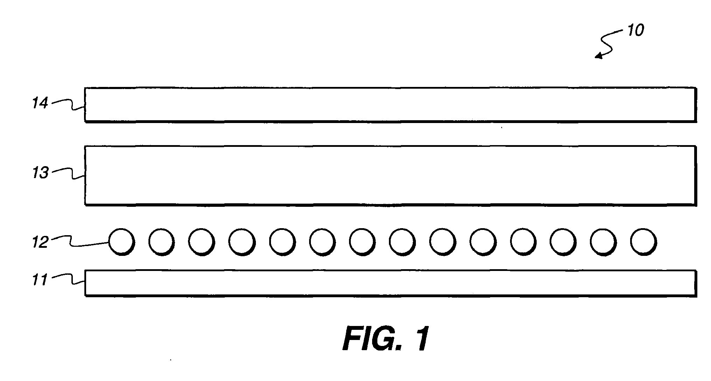

Figure 1 is a schematic of a back light unit 10 in a LCD device comprising one or more light sources 12 such as cold cathode fluorescent lamps (CCFL) or light emitting diodes (LED), a reflective plate 11, a diffuser 13 to provide a diffuse or lambertian distribution of light (so that the luminance output from the surface is approximately the same in all viewing directions) and a light re-directing film 14 to provide selective redistribution of light as a function of viewing angle. The light re-directing film 14 functions in combination with the reflective plate 11 to re-direct light such that upon passage of the diffusely distributed light through the light re-directing film, the on-axis luminance intensity is increased whereas the off-axis intensity is decreased. In the ideal case, this is achieved without any change in total light output.

Methods for producing light re-directing films are known in the art. Examples of such films are prism films also known as Vikuiti films available from 3M, St. Paul, Minnesota. The structure and fabrication of these films are more fully described in U.S. Pat. No. 6,581,286. The films comprise a smooth side and a structured side containing a plurality of triangular prisms. The films are composed of transparent material having an index of refraction greater than that of air. Although these films are effective in re-directing light, fabrication of the films is cumbersome. The process involves creating the micro-scale pattern by diamond turning on a roll and then transferring the pattern onto a sheet of plastic either by extrusion or by a cast and cure method. The light re-directing ability of these films is critically dependent on microstructure such as the angle of the prisms. Any modification of the luminance output profile of these films in terms of the luminance intensity versus viewing angle would require creation of an entirely new pattern by diamond turning which is non-trivial and expensive.

WO 2005/109085 describes another type of light re-directing film suitable for use in a backlit LCD. Once again, the films comprise a smooth side and a structured side. However, in this case the structured side comprises a close-packed monolayer of micro-hemispheres. It is suggested that the light re-directing ability of these films in terms of the on-axis gain in luminance intensity is comparable to the prism films described in U.S. Pat. No. 6,581,286 but a method of fabricating the films is not outlined.

WO 03/075085 suggests that films of the type described in WO 2005/109085 may be made by pressing beads into the surface of an adhesive elastomeric substrate. However, there is no evidence of the type of bead orientation that results nor that the resulting light re-directing properties meet the increasing needs of the display business.

US 2005/0002204 describes a light re-directing film similar to that of WO 2005/109085. But the process needed to form the film is extremely tedious involving a very large number of steps to create a pattern and transfer the pattern to a plastic sheet. The pattern is created by spin coating a buffer layer over a substrate, coating a photoresist layer over the buffer layer, patterning the photoresist layer by photolithography, heating the photoresist material to form the hemispherical structures and finally sputter coating a metal layer over the hemispheres. The pattern is then transferred onto plastic by microinjection technology. A multi-step process such as this is costly and not suitable for high volume manufacture on a large scale. Furthermore, it is not easy to modify the light re-directing properties of the film. Any modification would require going through the multitude of steps to create a new pattern.

US 6,852,396 describes a film suitable for use as diffuser 13 or diffuser sheet in a backlit LCD. The film consists of resinous beads and a fine inorganic filler material dispersed in a non-aqueous acrylic resin binder and coated on a transparent base sheet. The beads are not assembled into any particular pattern and there is no evidence that the film provides measurable on-axis gain in luminance intensity.

WO 2005/052677 also describes a film suitable for use as diffuser 13 or diffuser sheet in a backlit LCD. The film consists of transparent spherical organic beads dispersed in a non-aqueous binder resin such as an acrylic resin and coated on high transparency plastic. It is stated that mono-disperse beads or beads of low polydispersity is desirable and that there is deterioration of light diffusion efficiency if there is stacking of beads. Although the total integrated luminance intensity is improved over a control coating because of reduced scattering (less haze), there is no suggestion to use a particular pattern of the beads to achieve any light re-directing ability of the film (i.e. change in output luminance intensity as a function of the viewing angle).

A liquid suspension of very uniform (mono-disperse) microspheres spread on a suitable surface will self-assemble into a close-packed monolayer upon evaporation of the liquid during drying. The drying-assisted self-assembly originates from attractive capillary forces appearing between microspheres partially immersed in a liquid layer. The capillary attraction is caused by deformation of the liquid surface and the induced asymmetry of the contact line at the surface of a micro-sphere as the height of liquid in the film recedes during drying. The force of capillary attraction is directly proportional to the surface tension at the liquid-air or more generally liquid-gas interface. Additional details on drying assisted self-assembly of micro-spheres in a liquid may be found in Aizenberg et al. Physical Review Letters, volume 84, page 2997, March 2000 incorporated here as reference. However, although a close-packed monolayer of micro-spheres on a plastic sheet is relatively easily obtained by drying assisted self-assembly, such a film does not exhibit light re-directing properties. As stated in WO 2005/109085, a uniform close-packed monolayer of micro-hemispheres instead of micro-spheres is needed.

A self-assembly route for creating a close-packed monolayer of micro-hemispheres has been outlined by Yabu and Shimomura (Langmuir, volume 21, page 1709, 2005 incorporated here as reference). In this process a solution of polymer is first cast under humid conditions. Condensed water droplets then undergo self-assembly on the surface of the polymer solution. A close-packed array of spherical pores is obtained upon complete evaporation of solvent and water. A close-packed array of pillar structures is then generated by peeling off the top layer of the film of spherical pores. A close-packed monolayer of micro-hemispheres is formed by using the close-packed array of pillar structures as a negative mold. A polymeric material is coated over it and cured to create the positive. Although no information on the light re-directing ability of the film has been presented, it is conceivable that such a film may have light re-directing properties suitable for an LCD back light unit. However, fabrication of the film is still tedious requiring multiple steps. The latter is not desirable for low-cost high volume manufacturing.

The object of this invention is a simple low-cost method for creating a close-packed mono-layer of micro-hemispheres on a plastic sheet suitable for use in the backlight unit of an LCD as a light re-directing film. The inventors have determined that such a close-packed monolayer of micro-hemispheres of high refractive index with good light re-directing ability may be quite simply prepared by self-assembly of high refractive index micro-spheres of low polydispersity in an aqueous polymer binder of matching refractive index. The use of an aqueous medium instead of a non-aqueous medium as a carrier for the micro-spheres ensures a surface tension high enough to allow self-assembly by capillary attraction. Furthermore, a micro-hemispherical surface for light rays is created by simply adjusting the proportion of index matched polymer binder relative to the micro-spheres. It is also possible to create films of different light re-directing abilities by simply altering the proportion of index -matched binder to micro-spheres. In a second embodiment of the invention, self-assembly of condensed water droplets on a polymer solution is used to create a close-packed array of micro-hemispherical voids in a polymer film that is then used as a negative mold to prepare a close-packed monolayer of micro-hemispherical structures. Unlike in the work of Yabu and Shimomura, a close-packed monolayer of micro-hemispheres is achieved with a minimal number of steps.

### SUMMARY OF THE INVENTION

The invention provides a certain type of optical film, processes for making the film, and a backlight device containing the film. The film includes a substantially monolayer arrangement of beads partially submerged in a binder.

### BRIEF DESCRIPTION OF DRAWINGS

Figure 1 is a schematic of a typical backlight device of the art.
Figure 2 is a schematic of a light re-directing film according to a method of the invention.
Figure 3 is a schematic of a process and light re-directing film according to a second method of the invention.

### DETAILED DESCRIPTION OF THE INVENTION

As used herein:
"low polydispersity" means the Coefficient of Variation (cv) is less than 0.35.
"monolayer" means at least 80% of the theoretical close-packed maximum bead content is included in the first layer and no more than 5% of the number of beads in the first layer is present in a second layer.
"matched" refractive index means within 0.2 .
"partially submerged" means that from 25-75% of the bead surface is submerged.
"microbeads" "microspheres" and "beads" all mean polymeric ellipsoids having an equivalent circular diameter of 1-20 µm.
"microhemispheres" means partially submerged beads but not just hemispheres in the mathematical sense.
"weight% binder" or "wt% binder" means the weight of binder divided by the weight of binder plus weight of beads x 100. The portion or percentage of the bead surface that is submerged may be determined based on the weight% binder in the film from knowledge of the measured thickness of the binder in the film and the average size and average number of beads in a given area of the film.

They beads useful in this invention may be prepared in any manner suitable for obtaining the desired bead shape. Suitable methods are suspension and emulsion polymerization methods such as the limited coalescence technique as described by Thomas H. Whitesides and David S. Ross in "J. Colloid Interface Science "169. 48-59 (1995).

The limited coalescence method includes the "suspension polymerization" technique and the "polymer suspension" technique. A preferred method of preparing polymer particles in accordance with this invention is by a limited coalescence technique where poly-addition polymerizable monomer or monomers are added to an aqueous medium containing a particulate suspending agent to form a discontinuous (oil droplet) phase in a continuous (water) phase. The mixture is subjected to shearing forces, by agitation, homogenization and the like to reduce the size of the droplets. After shearing is stopped, an equilibrium is reached with respect to the size of the droplets as a result of the stabilizing action of the particulate suspending agent in coating the surface of the droplets, and then polymerization is completed to form an aqueous suspension of polymer particles. This process is described in U.S. Pat. Nos. 2,932,629; 5,279,934; and 5,378,577; which are incorporated herein by reference.

In the "polymer suspension" technique, a suitable polymer is dissolved in a solvent and this solution is dispersed as fine water immiscible liquid droplets in an aqueous solution that contains colloidal silica as a stabilizer. Equilibrium is reached and the size of the droplets is stabilized by the action of the colloidal silica coating the surface of the droplets. The solvent is removed from the droplets by evaporation or other suitable technique resulting in polymeric particles having a uniform coating thereon of colloidal silica. This process is hereafter described in US. Pat. No. 4,833,060 issued May 23, 1989, incorporated by reference. In practicing this invention using the suspension polymerization technique, any suitable monomer or monomers may be employed such as, for example, styrene, vinyl toluene, p-chlorostyrene; vinyl naphthalene; ethylenically unsaturated monoolefins such as ethylene, propylene, butylene and isobutylene; vinyl halides such as vinyl chloride, vinyl bromide, vinyl fluoride, vinyl acetate, vinyl propionate, vinyl benzoate and vinyl butyrate; esters of alpha-methylene aliphatic monocarboxylic acids such as methyl acrylate, ethyl acrylate, n-butylacrylate, isobutyl acrylate, dodecyl acrylate, n-octyl acrylate, 2- chloroethyl acrylate, phenyl acrylate, methyl-alpha-chloroacrylate, methyl methacrylate, ethyl methacrylate and butyl methacrylate; acrylonitrile, methacrylonitrile, acrylamide, vinyl ethers such as vinyl methyl ether, vinyl isobutyl ether and vinyl ethyl ether; vinyl ketones such as vinyl methylketone, vinyl hexyl ketone and methyl isopropyl ketone; vinylidene halides such as vinylidene chloride and vinylidene chlorofluoride; and Nvinyl compounds such as N-vinyl pyrrole, N-vinyl carbazole, N-vinyl indole and N-vinyl pyrrolidone divinyl benzene, ethylene glycol dimethacrylate, mixtures thereof; and the like.

In the suspension polymerization technique, other addenda are added to the monomer droplets and to the aqueous phase of the mass in order to bring about the desired result including initiators, promoters and the like which are more particularly disclosed in U.S. Pat. Nos. 2,932,629 and 4,148,741, both of which are incorporated herein by reference. Useful solvents for the polymer suspension process are those that dissolve the polymer, which are immiscible with water and which are readily removed from the polymer droplets such as, for example, chloromethane, dichloromethane, ethylacetate, vinyl chloride, methyl ethyl ketone, trichloromethane, carbon tetrachloride, ethylene chloride, trichloroethane, toluene, xylene, cyclohexanone, 2-nitropropane and the like. A particularly useful solvent is dichloromethane because it is a good solvent for many polymers while at the same time, it is immiscible with water. Further, its volatility is such that it can be readily removed from the discontinuous phase droplets by evaporation.

The quantities of the various ingredients and their relationship to each other in the polymer suspension process can vary over wide ranges, however, it has generally been found that the ratio of the polymer to the solvent should vary in an amount of from about 1 to about 80% by weight of the combined weight of the polymer and the solvent and that the combined weight of the polymer and the solvent should vary with respect to the quantity of water employed in an amount of from about 25 to about 50% by weight. The size and quantity of the colloidal silica stabilizer depends upon the size of the particles of the colloidal silica and also upon the size of the polymer droplet particles desired. Thus, as the size of the polymer/solvent droplets are made smaller by high shear agitation, the quantity of solid colloidal stabilizer is varied to prevent uncontrolled coalescence of the droplets and to achieve uniform size and narrow size distribution of the polymer particles that result. These techniques provide particles having a predetermined average diameter anywhere within the range of from 0.5 micrometer to about 150 micrometers with a very narrow size distribution. The coefficient of variation (ratio of the standard deviation to the average diameter, as described in US. Pat. No. 2,932,629) is normally below about 0.35.

The particular polymer employed to make the beads is a water-immiscible synthetic polymer that may be colored. The preferred polymer is any amorphous water immiscible synthetic polymer. Examples of polymer types that are useful are polystyrene, poly(methyl methacrylate) or poly(butyl acrylate). Copolymers such as a copolymer of styrene and butyl acrylate may also be used. Polystyrene polymers are conveniently used.

The distribution of high refractive index micro-sphere sizes is such that the coefficient of variation (cv) defined as the standard deviation of the distribution divided by the arithmetic mean is less than 0.35, preferably less than 0.2 and most preferably less than 0.15.

The diameter of the micro-spheres are suitably in the range of 1 to 20 micrometers, more suitably in the range of 4 to 20 micrometers and most suitably in the range of 6 to 15 micrometers.

The high refractive index polymer micro-spheres are typically dispersed in a continuous binder. Suitable hydrophilic binders include both naturally occurring substances such as proteins, protein derivatives, cellulose derivatives (for example cellulose esters), gelatins and gelatin derivatives, polysaccharides, casein, and synthetic water permeable colloids such as poly(vinyl lactams), acrylamide polymers, latex, poly(vinyl alcohol) and its derivatives, hydrolyzed polyvinyl acetates, polymers of alkyl and sulfoalkyl acrylates and methacrylates, polyamides, polyvinyl pyridine, acrylic acid polymers, maleic anhydride copolymers, polyalkylene oxide, methacrylamide copolymers, polyvinyl oxazolidinones, maleic acid copolymers, vinyl amine copolymers, methacrylic acid copolymers, acryloyloxyalkyl acrylate and methacrylates, vinyl imidazole copolymers, vinyl sulfide copolymers, and homopolymer or copolymers containing styrene sulfonic acid. A water-soluble binder having high refractive index such as gelatin is preferred.

The refractive index of the beads and the binder should be greater than 1.2, more suitably greater than 1.3 and most suitably greater than 1.4.

Gelatin is derived from a material called collagen. Collagen has a high content of glycine and of the imino acids proline and hydroxyproline. It has a triple helix structure made up of three parallel chains. When collagen in water is heated above a certain temperature, it will denature to form gelatin. Concentrated gelatin solutions form rigid gels when cooled. This phenomenon is known as solgel transition or thermal gelation and is the result of secondary bonding, such as hydrogen bonding, between gelatin molecules in solution. It should be noted that this property is not limited to gelatin; for example, aqueous solutions of agar, a polysaccharide from seaweed, will also form rigid gels upon cooling. Partial renaturation of gelatin also occurs upon cooling. The latter refers to the formation of triple helix collagen-like structures. The structures do not form if gelatin is not chill set prior to drying. In other words, molecules of gelatin remain in a random coil configuration if the coating is dried at a temperature that is above the sol-gel transition temperature. The presence of helix structures may be detected by x-ray diffraction.

Useful "gelatins," as that term is used generically herein, include alkali treated gelatin (cattle bone or hide gelatin), acid treated gelatin (pigskin gelatin), fish skin gelatin and gelatin derivatives such as acetylated gelatin, and phthalated gelatin. Any type of gelatin may be used, provided the gelatin has sufficient molecular weight to allow the crosslinker to crosslink or the fixative to fix or set. Fish gelatins have lower imino acid content compared to mammalian gelatins. The sol-gel transition temperature or thermal gelation temperature or chill set temperature is lower if the imino acid content is smaller. For example, the chill set temperature of gelatins derived from deep water fish such as cod, haddock or pollock is significantly lower than that of cattle gelatin. Aqueous solutions of these gelatins remain fluid until about 10°C whereas solutions of cattle gelatin will gel at room temperature. Other hydrophilic colloids that can be utilized alone or in combination with gelatin include dextran, gum arabic, zein, casein, pectin, collagen derivatives, collodion, agar-agar, arrowroot, albumin, and the like. Still other useful hydrophilic colloids are water soluble polyvinyl compounds such as polyvinyl alcohol, polyacrylamide, poly(vinylpyrrolidone), and the like.

Other water-soluble binders such as polyvinyl alcohol (PVA) or polyethylene oxide (PEO) can be used as minor components of the binder in addition to gelatin. Such compounds are preferably machine coatable on equipment associated with photographic films

A conventional surfactant can be added to the formulation to improve coating of the layer. Surfactants can be of conventional design, and are provided at a concentration that corresponds to the critical micelle concentration (CMC) of the solution. A preferred surfactant is Aerosol OT, commercially available from Cytec Industries, Inc

In a preferred embodiment, the polymer micro-spheres and gelatin binder are coated and dried to optimize the optical properties of the light re-directing film. In one embodiment, the layer is coated to provide a final coating containing a substantial monolayer of micro-hemispherical domains. The term "substantial monolayer" is defined by the Applicants to mean that, in a direction perpendicular to the plane of the light re-directing film sheet, there is no more than a single layer of domains over 80% of the area of the light re-directing sheet.

The amount of bead material needed for a monolayer can be determined by calculation based on individual micro-sphere size. The weight% binder can be adjusted to provide a desired optical response. The proportion or percentage of a micro-sphere that is submerged in the binder is related to the weight% binder in the film. The weight% binder in the film is suitably in the range of 15 to 80%, more suitably 20 to 70% and most suitably 25 to 60%.

A crosslinking agent or hardener may be used to preserve the architecture of the light re-directing film after it has been formed by self-assembly. Other methods of fixing the architecture of the close-packed monolayer of domains may also be used, although crosslinking is preferred. The effects of the crosslinker may be characterized based on the reaction of certain amino acid residues in gelatin. For example, the amount of histadine is typically reduced from about 4 residues per 1000 to less than 2.5 residues per 1000 upon cross-linking. Also the amount of hydroxyl ysine is reduced from about 6.9 residues per 1000 to less than 5.1 residues per 1000.

Many conventional hardeners are known to crosslink gelatin. Gelatin crosslinking agents (i.e., the hardener) are included in an amount of at least about 0.01 wt.% and preferably from about 0.1 to about 10 wt.% based on the weight of the solid dried gelatin material used (by dried gelatin it is meant substantially dry gelatin at ambient conditions as for example obtained from Eastman Gel Co., as compared to swollen gelatin), and more preferably in the amount of from about 1 to about 5 percent by weight. More than one gelatin crosslinking agent can be used if desired. Suitable hardeners may include inorganic, organic hardeners, such as aldehyde hardeners and olefinic hardeners. Inorganic hardeners include compounds such as aluminum salts, especially the sulfate, potassium and ammonium alums, ammonium zirconium carbonate, chromium salts such as chromium sulfate and chromium alum, and salts of titanium dioxide, and zirconium dioxide. Representative organic hardeners or gelatin crosslinking agents may include aldehyde and related compounds, pyridiniums, olefins, carbodiimides, and epoxides. Thus, suitable aldehyde hardeners include formaldehyde and compounds that contain two or more aldehyde functional groups such as glyoxal, gluteraldehyde and the like. Other preferred hardeners include compounds that contain blocked aldehyde functional groups such as aldehydes of the type tetrahydro-4-hydroxy-5-methyl-2(1H)-pyrimidinone polymers (Sequa SUNREZ® 700), polymers of the type having a glyoxal polyol reaction product consisting of 1 anhydroglucose unit: 2 glyoxal units (SEQUAREZ® 755 obtained from Sequa Chemicals, Inc.), DME-Melamine non-formaldehyde resins such as Sequa CPD3046-76 obtained from Sequa Chemicals Inc., and 2,3-dihydroxy-1,4-dioxane (DHD). Thus, hardeners that contain active olefinic functional groups include, for example, bis-(vinylsulfonyl)-methane (BVSM), bis-(vinylsulfonyl-methyl) ether (BVSME), 1,3,5-triacryloylhexahydro-s-triazine, and the like. In the context of the present invention, active olefinic compounds are defined as compounds having two or more olefinic bonds, especially unsubstituted vinyl groups, activated by adjacent electron withdrawing groups (The Theory of the Photographic Process, 4th Edition, T.H. James, 1977, Macmillan Publishing Co., page 82). Other examples of hardening agents can be found in standard references such as The Theory of the Photographic Process, T.H.James, Macmillan Publishing Co., Inc. (New York 1977) or in Research Disclosure, September 1996, Vol. 389, Part IIB (Hardeners) or in Research Disclosure, September 1994, Vol. 365, Item 36544, Part IIB (Hardeners). Research Disclosure is published by Kenneth Mason Publications, Ltd., Dudley House, 12 North St., Emsworth, Hampshire P010 7DQ, England. Olefinic hardeners are most preferred, as disclosed in U.S. Pat. Nos. 3,689,274, 2,994,611, 3,642,486, 3,490,911, 3,635,718, 3,640,720, 2,992,109, 3,232,763, and 3,360,372.

Among hardeners of the active olefin type, a preferred class of hardeners particularly are compounds comprising two or more vinyl sulfonyl groups. These compounds are hereinafter referred to as "vinyl sulfones". Compounds of this type are described in numerous patents including, for example, U.S. Patents 3,490,911, 3,642,486, 3,841,872 and 4,171,976. Vinyl sulfone hardeners are believed to be effective as hardeners as a result of their ability to crosslink polymers making up the colloid.

Under certain conditions, monodisperse micro-spheres will spontaneously self-assemble on a surface into a close-packed monolayer structure. The process has been described in detail by Denkov et al. (Nature, vol. 361, p.26, 1993). When a suspension of micro-spheres is spread on a surface, the micro-spheres initially assume a random, disordered or uncorrelated distribution. However, as a function of drying, when the level of liquid in the suspension reaches the top of the micro-spheres, there is a strong attractive force known as the capillary force that drives the micro-spheres into a close-packed ordered or correlated structure. The attractive energy of the capillary force is much greater than the thermal energy. The magnitude of the capillary force is directly proportional to the surface tension at the air-liquid or air-coating interface of the drying film. It is desirable that the surface tension is greater than 25 dynes/cm, more suitably greater than 35 dynes/cm and most suitably greater than 40 dynes/cm. It is also important that lateral movement of micro-spheres is not impeded by a strong attraction to the surface or by an increase in viscosity of the medium in which they are suspended. The latter would happen if the binder is gelatin and the coated layer of droplets is chill set prior to drying.

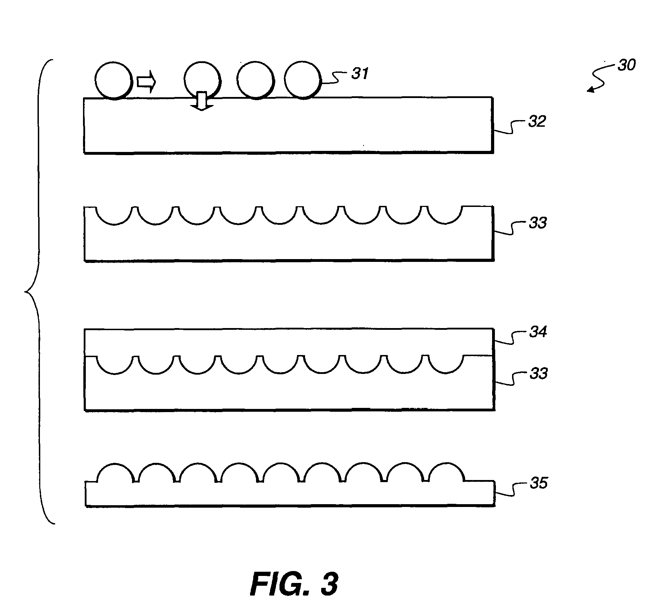

As shown in Figure 3, it is also possible for condensed water droplets 31 on the surface of a polymer solution 32 to self-assemble into a close-packed array when a coating of the polymer solution is dried in a humid atmosphere. In this case also the self-assembly is driven by the surface tension at the aqueous-air interface. Upon completion of evaporation, a polymer film containing a close-packed array of micro-voids or micro-hemispherical voids is created wherein the voids in the polymer film have a hemi-spherical shape with diameter in the range of 1 to 50 microns and depth in the range of 0.5 to 25 microns. The micro-voided polymer film 33 may then be used as a template to create a micro-hemispherical array by casting on the micro-voided polymer film a composition 34 that may be cured by heat or by radiation. The cured composition 35 is separated from the micro-voided polymer film by means such as washing or peeling for use as an optical or light re-directing film. The cured composition has a refractive index greater than 1.2, more suitably more than 1.3 and most suitably more than 1.4. Suitable polymers for preparing the micro-voided polymer film are polymers based on polycarbonate, polystyrene, cellulose triacetate, cellulose acetate butyrate and polymethylmethacrylate. Polycarbonate and polystyrene are most suitable. A suitable composition for casting on the micro-voided polymer film is Sylgard 184 from Dow Coming Corporation.

The formation of a close-packed structure in two dimensions, starting from a random distribution of droplets or micro-spheres, is sometimes referred to as two-dimensional crystallization and should have a monodisperse population of droplets or a population of micro-spheres having low polydispersity (Kumacheva et al. Physical Review Letters vol. 91, page 1283010-1, 2003). A population of polymer micro-spheres of high refractive index material having sufficiently low polydispersity to create a close-packed structure may be achieved by the limited coalescence process. The close-packed structure is readily observable under an optical microscope. Furthermore, the close-packed structure has a repeat pattern or periodicity wherein the repeat distance is of the order of the wavelength of visible light. A coating having such a pattern exhibits Fraunhofer diffraction when placed before a source of visible light such as a visible light laser. The phenomenon of Fraunhofer diffraction is described more fully by Lisensky et al. Journal of Chemical Education, vol. 68, February 1991.

For perfectly monodisperse droplets (cv less than 0.1), a hexagonal close-packed (HCP) structure is obtained. The diffraction pattern for such a structure is in the form of spots. If there is a minor level of polydispersity (cv between 0.1 and 0.2), the diffraction pattern of the close-packed structure is in the form of a single ring or a set of concentric rings.

The close-packed monolayer structure of coated micro-spheres may be preserved by fixing or crosslinking the binder.

A typical light re-directing film in its simplest form comprises a sheet supporting a close-packed monolayer of micro-hemispheres. The sheet includes a substrate. Substrate can be made of a polymeric material, such as Kodak Estar film base formed of polyester plastic, and have a thickness of between 20 and 200 microns. For example, substrate can be an 80 micron thick sheet of transparent polyester. Other polymers, such as transparent polycarbonate, can also be used

The flexible plastic substrate can be any flexible self-supporting plastic film.

The flexible plastic substrate must have sufficient thickness and mechanical integrity so as to be self-supporting, yet should not be so thick as to be rigid. Typically, the flexible plastic substrate is the thickest layer of the composite film in thickness. Consequently, the substrate determines to a large extent the mechanical and thermal stability of the fully structured composite film.

Another significant characteristic of the flexible plastic substrate material is its glass transition temperature (Tg). Tg is defined as the glass transition temperature at which plastic material will change from the glassy state to the rubbery state. It may comprise a range before the material may actually flow. Suitable materials for the flexible plastic substrate include thermoplastics of a relatively low glass transition temperature, for example up to 150° C, as well as materials of a higher glass transition temperature, for example, above 150° C. The choice of material for the flexible plastic substrate would depend on factors such as manufacturing process conditions, such as deposition temperature, and annealing temperature, as well as post manufacturing conditions such as in a process line of a displays manufacturer. Certain of the plastic substrates discussed below can withstand higher processing temperatures of up to at least about 200° C, some up to 300-350° C, without damage. Typically, the flexible plastic substrate is polyethylene terephthalate (PET), polyethylene naphthalate (PEN), polyethersulfone (PES), polycarbonate (PC), polysulfone, a phenolic resin, an epoxy resin, polyester, polyimide, polyetherester, polyetheramide, cellulose acetate, aliphatic polyurethanes, polyacrylonitrile, polytetrafluoroethylenes, polyvinylidene fluorides, poly(methyl (x-methacrylates), an aliphatic or cyclic polyolefin, polyarylate (PAR), polyetherimide (PEI), polyethersulphone (PES), polyimide (PI), Teflon poly(perfluoro-alboxy) fluoropolymer (PFA), poly(ether ether ketone) (PEEK), poly(ether ketone) (PEK), poly(ethylene tetrafluoroethylene) fluoropolymer (PETFE), and poly(methyl methacrylate) and various acrylate/methacrylate copolymers (PMMA). Aliphatic polyolefins may include high density polyethylene (HDPE), low density polyethylene (LDPE), and polypropylene, including oriented polypropylene (OPP). Cyclic polyolefins may include poly(bis(cyclopentadiene)). A preferred flexible plastic substrate is a cyclic polyolefin or a polyester. Various cyclic polyolefins are suitable for the flexible plastic substrate. Examples include Arton® made by Japan Synthetic Rubber Co., Tokyo, Japan, Zeanor T made by Zeon Chemicals L.P., Tokyo Japan, and Topas® made by Celanese A. G., Kronberg Germany. Arton is a poly(bis(cyclopentadiene)) condensate that is a film of a polymer. Alternatively, the flexible plastic substrate can be a polyester. A preferred polyester is an aromatic polyester such as Arylite.

### EXAMPLES

### Example 1 (invention)

This example illustrates fabrication of a light re-directing film according to a method of the invention.

Polymer micro-spheres based on a mixture of styrene and divinylbenzene were prepared in the following manner.

Poly-2-methylaminoethanol adipate (0.225 grams), distilled water (70.5 grams) and potassium dichromate (0.028 grams) were combined in a beaker and stirred until all solids were fully dissolved. To this was added 2.025 grams of an aqueous dispersion of silica particles (Ludox TM from Dupont) and the mixture was stirred.

Styrene (57 grams), 3 grams of divinylbenzene (55% active) and 2.025 grams of Vazo 52 initiator from Dupont were added to a second beaker and stirred until all solids dissolved.

The organic phase was combined with the aqueous phase and stirred for about 15 minutes. The mixture was passed through a homogenizer to prepare an emulsion. The emulsion was then placed in a flask and the temperature of the flask was adjusted to 50 C to allow the polymerization reaction to proceed. After 16 h, the temperature was raised to 85 C and the flask was maintained at this temperature for another 4 h. The flask was then cooled to room temperature. The suspension of polymer micro-spheres was poured onto a filter cloth and rinsed with 200 grams of distilled water followed by 50 grams of methanol. The microspheres were then placed on a tray and dried overnight under vacuum at 60 C. The temperature of the dryer was then increased to 85 C and the micro-spheres were dried for an additional 48 h.

The polymer micro-spheres were then re-dispersed in water containing 1 wt % Aerosol OT to create a suspension containing 25 wt% micro-spheres. The particle size and size distribution of the micro-spheres were determined using a Coulter Counter. The mean size was 10.8 microns with a standard deviation of 1.2. The coefficient of variation (cv) defined as the ratio of the standard deviation to the arithmetic mean was 0.11.

Light re-directing films based on these micro-spheres (refractive index ~ 1.59) were prepared as follows. An aqueous solution of fish skin gelatin (from Norland Products Incorporated) containing Aerosol OT (0.4 wt% based on the weight of gelatin) was spread at room temperature on the surface of a sheet of subbed polyethylene terephthalate (PET) (refractive index ~ 1.61) to provide a uniform thickness of dried gelatin (refractive index ~ 1.52) over an area of the plastic sheet. The coating was dried at 54 C for 10 min. The suspension of polymer micro-spheres was then coated over the dried gelatin binder film. The concentration of polymer micro-spheres was adjusted to create a close-packed mono-layer of micro-spheres by drying assisted self-assembly partially immersed in the gelatin binder after drying. The suspension of polymer micro-spheres was coated at 22 C and the coating was dried at the same temperature. A sample of the dried coating was positioned facing a helium-neon laser (Spectra Physics model 155A). A screen was placed behind the sample. The coating showed diffraction rings on the screen caused by Fraunhofer diffraction of light indicating an ordered close-packed monolayer of micro-spheres in the coating.

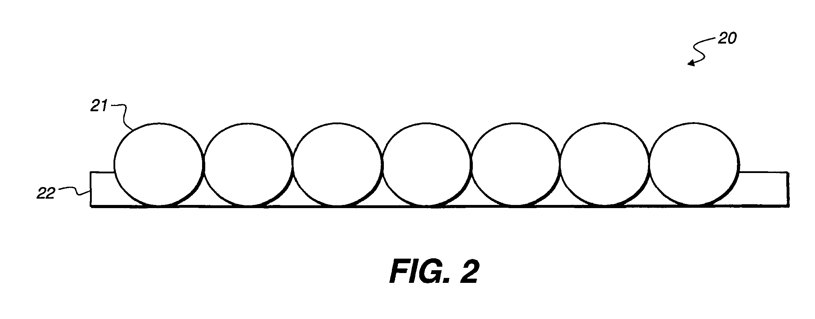

Figure 2 shows a schematic of the light re-directing film 20. The figure shows a close-packed array of micro-spheres 21 of refractive index nl embedded in a binder 22 of refractive index n2. Films with different light re-directing properties were prepared by simply varying the wt% binder in the composite film (comprising micro-spheres and binder). The luminance as a function of viewing angle relative to the slab diffuser in the Sharp Aquos TV backlight unit was determined using an ELDIM EZ Contrast 160R apparatus.

### Luminance Versus Viewing Angle Relative to Slab Diffuser

| Wt % Binder | -80 degrees Viewing Angle | -60 | -40 | -20 | 0 | +20 | +40 | +60 | +80 |
|---|---|---|---|---|---|---|---|---|---|
| 25 | 0.64 | 0.85 | 0.96 | 1.14 | 1.19 | 1.15 | 0.96 | 0.85 | 0.66 |
| 33 | 0.60 | 0.78 | 0.95 | 1.17 | 1.22 | 1.17 | 0.94 | 0.78 | 0.62 |
| 40 | 0.55 | 0.72 | 0.96 | 1.16 | 1.19 | 1.16 | 0.95 | 0.72 | 0.58 |
| 45 | 0.53 | 0.74 | 1.02 | 1.17 | 1.16 | 1.16 | 1.01 | 0.74 | 0.57 |
| 50 | 0.53 | 0.76 | 1.03 | 1.16 | 1.16 | 1.14 | 1.02 | 0.76 | 0.56 |
| 54 | 0.54 | 0.77 | 1.05 | 1.13 | 1.13 | 1.12 | 1.04 | 0.78 | 0.56 |

It is clear that all the films exhibit the ability to re-direct light with luminance being greater relative to the slab diffuser for on-axis viewing (0 degrees) and lower relative to the slab diffuser at large angles off axis. It is clear that the ability of the films to re-direct light may be modulated based on composition. For example, at 25 wt% binder, the on-axis luminance is 119% of that with the slab diffuser alone whereas at angles of 60 degrees off-axis the luminance is 85% of that with the slab diffuser. At 33 wt% binder the corresponding values are 122% and 78 % respectively.

### Example 2 (invention)

This example illustrates fabrication of a light re-directing film according to a second method of the invention.

In this case a suspension of pure polystyrene micro-spheres (mean size of 12 microns and refractive index ~ 1.59) prepared by a procedure similar to that described in Example 1 was combined with an aqueous solution of fish skin containing Olin 10G (1.7% based on the weight of gelatin) and coated as a single layer on subbed PET to create a close-packed structure of micro-spheres in the polymer (gelatin) binder upon drying by drying assisted self-assembly. The weight percent binder in the coating was 33%. The aqueous medium of fish skin gelatin and Olin 10G had a surface tension of about 43 dynes/cm. The on-axis luminance relative to the slab diffuser in the Sharp Aquos TV backlight unit was 1.21 indicating a significant ability of the film to re-direct light.

### Example 3 (control)

In this example a light re-directing film was prepared using a process similar to that described in examples 1 and 2 but using a dispersion of the microspheres in a non-aqueous medium instead of an aqueous medium. Polymer microspheres based on a mixture of styrene and divinylbenzene were prepared as in example 1. These were then dispersed in toluene along with polystyrene (#675W from Dow Coming Corporation; refractive index ~ 1.59) and a coating aid (FC431). The non-aqueous medium of polystyrene (#675W from Dow Coming Corporation) and FC431 had a surface tension of about 19.5 dynes/cm. The mixture was then coated on subbed PET and allowed to dry. The weight percent binder in the coating was 25% and the concentration of micro-spheres was calculated to provide a close-packed mono-layer over the area of the plastic sheet upon coating and drying. However, in this case a diffraction pattern characteristic of close-packed order was not observed when the coating was held in front of a laser beam. The on-axis luminance gain of this film measured using the set-up described in examples 1. and 2 was 1.15; lower than that obtained in aqueous coatings with comparable weight percent binder indicating a reduced light re-directing ability of this film.

### Example 4 (invention)

This example illustrates fabrication of a light re-directing film according to a third method of the invention.

A solution containing 23.8 wt% polycarbonate (Bayer DPI 1265) and 0.1 % FC431 surfactant (based on the weight of polycarbonate) in dicholoromethane was applied on the surface of a sheet of PET at a coverage of 452 cm³/m². The wet coating was then immediately inserted into a closed chamber where the temperature and humidity were controlled at 22 C and 60% RH and kept there for 5 minutes. After evaporation of the organic solvent, the sheet was kept in the chamber for an additional 5 minutes and the chamber was purged with nitrogen gas to remove residual water. The resulting micro-voided polymer film was then peeled off the PET substrate.

Sylgard 184 silicone elastomer base (from Dow Coming Corporation) (refractive index ~ 1.41) was combined with Sylgard curing agent (also from Dow Coming) in a 10:1 weight ratio. The mixture was applied at a coverage of 151 cm³/m² to the surface of the micro-voided polymer film at 22 C. The elastomer was then cured in contact with the mold by heating to 100 C for one hour. The cured elastomer film with the imprint of the mold was then released from the mold by peeling off and evaluated for light re-directing properties. The on-axis luminance relative to the slab diffuser in the Sharp Aquos TV backlight unit was 1.16, once again indicating a significant ability of the film to re-direct light.

### PARTS LIST

- 10: Backlight Unit
- 11: Reflective Plate
- 12: Light Source
- 13: Diffuser
- 14: Light Re-directing Film
- 20: Film of the Invention
- 21: Partially Submerged Beads
- 22: Binder
- 30: Process and Film of the Invention
- 31: Condensed Water Droplets
- 32: Coating of Polymer Solution
- 33: Micro-voided Polymer Film
- 34: Cast Curable Composition
- 35: Cured Composition

## Claims

1. A process for forming an optical film comprising the steps of:
(a) applying to a transparent substrate a coating comprising (1) a carrier (2) an aqueous dispersible or soluble polymeric binder and (3) a bead population of desired refractive index and low polydispersity, wherein the binder is selected to have a refractive index that substantially matches that of the beads upon removal of the carrier, and wherein the relative proportions of the coating components is sufficient to provide a substantially mono layer arrangement of the beads that is partially submerged in the binder upon removal of the carrier; and
(b) removing the carrier from the coating to provide a substrate coated with a substantially mono layer arrangement of the beads that is partially submerged in the binder.

2. The process of claim 1 wherein the weight% binder is selected so as to obtain a desired degree of submersion whereby a desired angular light distribution can be obtained.

3. The process of claim 1 wherein the proportions are selected to provide a substantially mono-layer arrangement of the beads that is partially submerged in the binder so that the weight% binder is from 15 to 80%.

4. The process of claim 1 wherein the proportions are selected to provide a substantially mono-layer arrangement of the beads that is partially submerged in the binder so that the weight% binder is from 20 to 70%.

5. The process of claim 1 wherein the proportions are selected to provide a substantially mono-layer arrangement of the beads that is partially submerged in the binder so that the weight% binder is from 25 to 60%.

6. The process of claim 1 wherein the binder is selected to provide a sol-gel transition temperature below 30°C.

7. The process of claim 1 wherein the binder is selected to provide a sol-gel transition temperature below 20°C.

8. The process of claim 1 wherein the binder is selected to provide a sol/gel transition temperature below 10°C.

9. The process of claim 1 wherein the binder comprises a gelatin.

10. The process of claim 1 wherein the binder comprises a gelatin derived from a marine species.

11. The process of claim 1 wherein the binder comprises fish gelatin.

12. The process of claim 1 wherein the refractive index of the bead is within 0.2 of that of the binder after carrier removal.

13. The process of claim 1 wherein the beads have a coefficient of variation of less than 0.2.

14. The process of claim 1 wherein the beads have a coefficient of variation of less than 0.15.

15. The process of claim 1 wherein the carrier is water.

16. The process of claim 1 wherein the binder is subjected to a crosslinking step.

17. The process of claim 1 wherein the carrier is removed by drying in air and the surface tension at the air/coating interface is at least 25 dynes/cm.

18. The process of claim 1 wherein the refractive index of the beads and the binder is at least 1.2.

19. A light redirecting device comprising in order:
(a) a light source and
(b) an optical film which comprises, in the direction of light travel, a transparent substrate bearing a layer containing a bead population of desired refractive index and low polydispersity disposed in an aqueous dispersible or soluble polymeric binder, wherein:
the bead refractive index is matched to the binder,
the bead population is present in a substantially monolayer arrangement of the beads with the beads partially submerged in the binder; and
(c) a transparent medium exhibiting a refractive index at least 0.2 less than that of the bead population.

20. The device of claim 19 wherein the binder comprises gelatin.

21. The device of claim 19 wherein the binder comprises gelatin having a sol-gel temperature less than 30°C.

22. The device of claim 19 wherein the binder comprises gelatin having a sol-gel temperature less than 20°C.

23. The device of claim 19 wherein the binder comprises gelatin having a sol-gel temperature less than 10°C.

24. The device of claim 19 wherein the binder comprises fish gelatin.

25. The device of claim 19 wherein the binder is a gelatin that comprises an imino content of less than 20% by weight.

26. The device of claim 19 wherein the beads have an average diameter of from 1 to 20 µm.

27. The device of claim 19 wherein the proportions of bead and binder are selected to provide a substantially mono-layer arrangement of the beads that is partially submerged in the binder so that the weight% binder is from 15 to 80%.

28. The device of claim 19 wherein the proportions of bead and binder are selected to provide a substantially mono-layer arrangement of the beads that is partially submerged in the binder so that the weight% binder is from 20 to 70%.

29. The device of claim 19 wherein the proportions of bead and binder are selected to provide a substantially mono-layer arrangement of the beads that is partially submerged in the binder so that the weight% binder is from 25 to 60%.

30. The device of claim 19 wherein the beads are ellipsoidal.

31. The device of claim 19 wherein the beads are spherical.

32. The device of claim 19 wherein the beads contain a polymer or copolymer based on one selected from styrene, acrylate, methacrylate, and vinylidene chloride.

33. The device of claim 19 wherein the beads are made by the process of "limited coalescence".

34. The device of claim 19 wherein a diffusive component providing uniform illumination and hiding the light source appearance is located between the light source (a) and the optical film (b),

35. The device of claim 34 additionally comprising a reflective polarizer.

36. The device of claim 19 wherein a component (d) comprises a pixelated light-gating device creating images.

37. An optical film which comprises a transparent substrate bearing a layer containing a bead population of desired refractive index and low polydispersity disposed in an aqueous dispersible or soluble polymeric binder, wherein:
the bead refractive index is matched to the binder,
the bead population is present in a substantially monolayer arrangement of the beads with the beads partially submerged in the binder.

38. A process for forming an optical film comprising the steps of:
(a) applying to a substrate a coating comprising a polymer in a solvent;
(b) drying the coating in a humid atmosphere to create a micro-voided polymer film;
(c) coating a curable composition over the micro-voided polymer film;
(d) curing the curable composition by heat or by radiation; and
(e) separating the cured optical film composition from the micro-voided polymer film.
